# EUROPEAN PATENT APPLICATION

(11) **EP 1 020 277 A1**
(43) Date of publication of application: **19.07.2000**
(21) Application number: 00100383.9
(22) Date of filing: 07.01.2000
(51) Int. Cl.: B29C 45/14, B65D 51/00

(54) **Method for manufacturing laminated rubber closure and laminated rubber closure produced thereby**

(30) Priority: 11.01.1999 JP 435099
(71) Applicant: DAIKYO SEIKO, LTD., Tokyo (JP)
(72) Inventor: Sudo, Morihiro, c/o Daikyo Seiko, Ltd., Tokyo (JP); Togashi, Hiroshi, c/o Daikyo Seiko, Ltd., Tokyo (JP)
(74) Representative: Schaumburg, Thoenes & Thurn

(57) **Abstract**

A method for manufacturing a laminated rubber closure includes forming a lower rubber closure body (14) of a rubber material with a synthetic resin film (12) laminated thereon, with the synthetic resin film (12) being exposed to the outer surface of the rubber closure body and with the upper surface of the lower rubber closure made of the rubber material being exposed to the outside, inserting the lower rubber closure body (14) in a cavity (41) of a lower die (40), setting an upper die (50) having a cavity (51) corresponding to the cavity (41) of the lower die (40) above the lower die, injecting a rubber material into the cavity (51) of the upper die, and vulcanizing and forming an upper rubber closure body (15) integral with and on the lower rubber closure body (14) disposed in the cavity (41) of the lower die (40). The invention also provides a laminated rubber closure produced by the manufacturing method.

## Description

### BACKGROUND OF THE INVENTION

### 1. Field of the Invention

The present invention relates to a method for manufacturing a laminated rubber closure for a container wherein a synthetic resin film is provided on a lower portion of a contact portion thereof, to fit around an inner periphery of a mouth of the container. The present invention also relates to a laminated rubber closure produced by the above method.

### 2. Description of the Related Art

In a known laminated rubber closure for a container, a lower part of the portion of the rubber closure body that is in contact with the mouth of the container is coated with a synthetic resin film having a high chemical resistance, and the rubber material of which the closure body is made is exposed at an upper part of the contact portion to enhance a seal effect between the closure body and the container mouth portion. Conventionally, this kind of laminated rubber closure is formed by two press steps. Namely, a masticated rubber material is preformed into a flat sheet of rubber on which a synthetic resin film is applied to be used as a raw sheet material for the molding. The raw rubber sheet is subject to a first press operation to form a lower rubber closure body which is cut by punching. The lower rubber closure body is coated at its outer peripheral surface with the synthetic resin film and is exposed at the upper surface thereof with the rubber material. In a second press step, the lower rubber closure bodies are disposed in cavities of a lower die; another rubber sheet which has been formed by preforming a masticated rubber material is placed on the lower die; and an upper die is moved and pressed onto the rubber sheet to form and vulcanize upper rubber closure bodies on the lower rubber closure bodies.

However, in the conventional manufacturing method of a laminated rubber closure as mentioned above, two preformation operations of rubber sheets are necessary wherein the rubber sheet is preformed from a masticated rubber in each preformation operation. It takes time to carry out the preformation operations and there is a possibility that foreign matter is mixed in the preformed rubber sheet during the conveyance thereof. In particular, in case of a rubber closure for use as a medical container closure in the pharmaceutical industry, the contamination by the mixture is fatal and unacceptable and hence extremely careful operations are needed, thus leading to an increase in the manufacturing cost.

### SUMMARY OF THE INVENTION

It is an object of the present invention to provide a laminated rubber closure manufacturing method in which the second press can be dispensed with and accordingly, the preformation of a rubber sheet from a masticated rubber material, involved with the second press is necessary.

Another object of the present invention is to provide a laminated rubber closure produced by the method.

According to the basic concept of the present invention, the above-mentioned drawbacks of the prior art, and particularly the problem with the contamination caused by the mixing of foreign matter can be eliminated by replacing the conventional second press with an injection molding of a rubber material.

Namely, according to an aspect of the present invention, in a method for manufacturing a laminated rubber closure in which a synthetic resin film of a lower rubber closure body is brought into contact with a lower part of an inner peripheral surface of a mouth of a container in which the rubber closure is to be inserted and a rubber material of which an upper rubber closure body is made is brought into contact with a lower part of the inner peripheral surface of the mouth, the method comprises: forming a lower rubber closure body of a rubber material with a synthetic resin film laminated thereon, with the synthetic resin film being exposed to the outer surface of the rubber closure body, and with the upper surface of the lower rubber closure made of the rubber material being exposed to the outside; inserting the lower rubber closure body in a cavity or cavities of a lower die; setting an upper die having a cavity or cavities corresponding to the cavity (or cavities) of the lower die above the lower die; and injecting a rubber material into the cavity (or cavities) of the upper die and vulcanizing and forming an upper rubber closure body integral with and on the lower rubber closure body disposed in the cavity (cavities) of the lower die.

The synthetic resin film is preferably made of one or more resin materials having a high chemical resistance, selected from a group of tetrafluoroethylene, ethylene-tetrafluoroethylene or ultra-macromolecular polyethylene.

According to another aspect of the present invention, a laminated rubber closure produced by the manufacturing method mentioned above is also provided.

### BRIEF DESCRIPTION OF THE DRAWINGS

The present invention will be discussed below in detail with reference to the accompanying drawings, in which:
Figure 1 shows a first press step in a laminated rubber closure manufacturing process according to the present invention;
Figure 2 is a perspective view of a mold having a plurality of lower rubber closure bodies produced by the first press step shown in Fig. 1;
Figure 3A shows a sectional view of a single lower rubber closure body cut from the mold shown in Fig. 2 by punching;
Figure 3B shows a perspective view of a single lower rubber closure body cut from the mold shown in Fig. 2 by punching;
Figure 4 is a sectional view of injection molding dies in which lower rubber closure bodies formed by the first press shown in Fig. 1 are disposed in cavities of a lower die, and thereafter an upper die and a rubber material pressing upper die are disposed on the lower die to perform an injection molding;
Figure 5 is a sectional view of injection molding dies in a different position;
Figure 6 is a sectional view of injection molding dies in a different position;
Figure 7 is a partially broken perspective view of a laminated rubber closure comprised of upper and lower rubber closure bodies which has been made integral by an injection molding;
Figure 8 is a sectional view of a laminated rubber closure produced by the process shown in Figs. 1 through 7 and fitted in a mouth of a container; and
Figure 9 is a sectional view of another injection molding machine for making a laminated rubber closure according to the present invention.

### DESCRIPTION OF THE PREFERRED EMBODIMENT

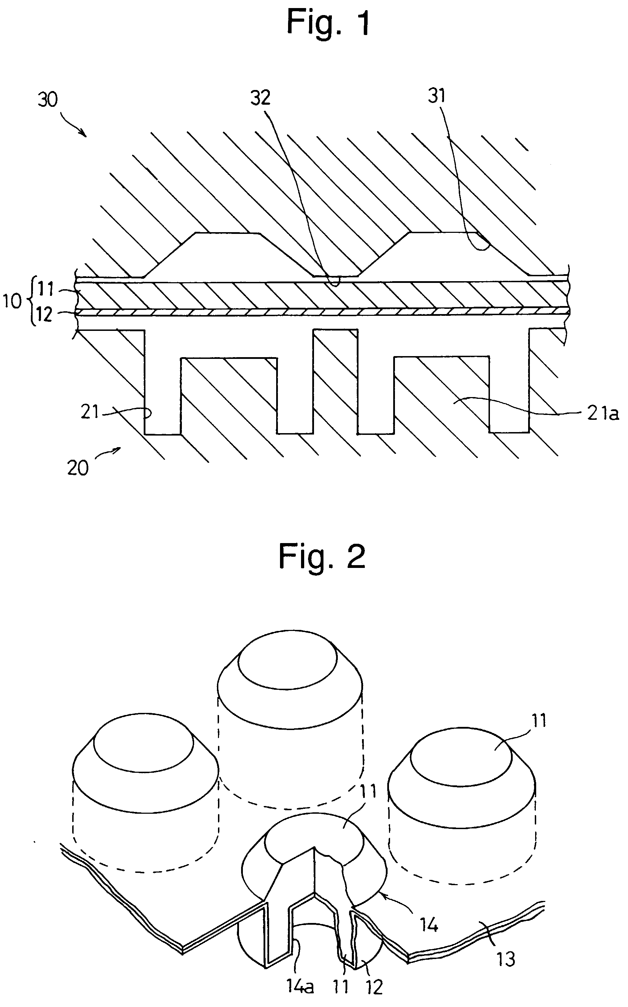

Figs. 1 through 3B show a production process to make lower rubber closure bodies from a laminated rubber sheet 10 with a film laminated thereon. The laminated rubber sheet 10 includes a rubber sheet 11 formed from a masticated rubber material and a synthetic resin film (laminate film) 12 coated thereon. The laminated rubber sheet 10 can be produced by a production process per se known.

The laminated rubber sheet 10 is fed onto a press lower die 20 having a plurality of cavities 21, with the laminate film 12 facing downward. A press upper die 30 corresponding to the lower die 20 has a plurality of cavities 31 for the closure bodies, corresponding to the cavities 21 of the lower die 20 and a connection passageway 32 through which the cavities 31 are interconnected.

The pressing upper die 30 is moved downward toward the lower die 20 on which the film-laminated rubber sheet 10 is placed. The lower die 20 and the upper die 30 are heated in advance to an appropriate temperature. The laminate film 12 of the rubber sheet 10 is formed in and along the cavities 21 and the rubber sheet 11 flows into the cavities 21 and 31 and the connection passageway 32 and is formed therein.

The molded product is shown in Fig. 2 in which a number of lower rubber closure bodies 14, each consisting of the rubber body 11 and the laminate film 12 provided on the lower surface of the rubber body 11, are interconnected by a rubber connection portion 13.

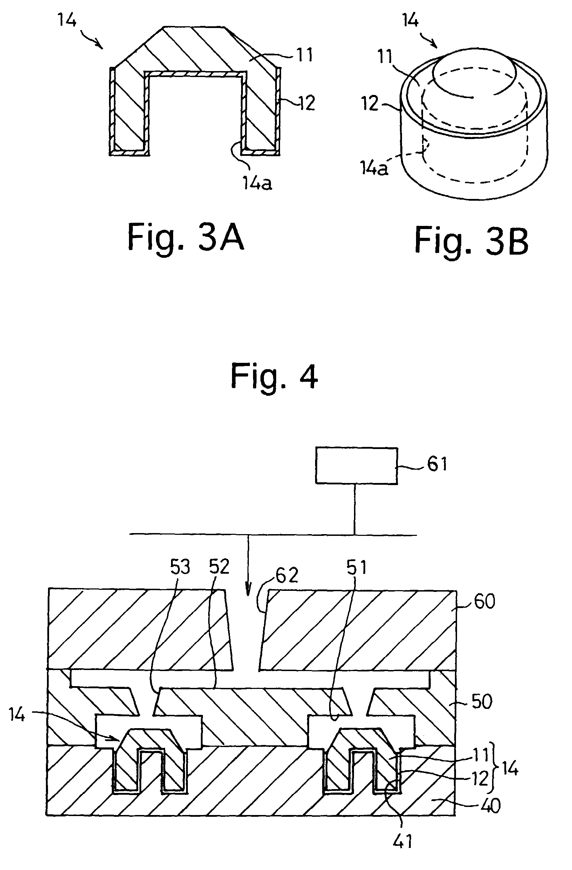

Thereafter, the lower closure bodies 14 are disconnected from one another and from the molded product by cutting the connection portion 13 (Fig. 3A and 3B). In the lower closure body 14 in the illustrated embodiment, the rubber body 11 is provided with an exposed upper portion in the form of a truncated cone, extending upward from a cylindrical laminate film 12 and a central recess 14a at the lower portion of the rubber body 11. The shape of the upper portion of the rubber body 11 is optional and is not limited to a truncated cone, and the recess 14a can be dispensed with. The shape of the lower closure body 14 is optional so long as the laminate film 12 is exposed to the outside. The rubber body 11 is made of a rubber material such as IIR, NBR, BR, EPDM, etc. The laminate film 12 is made of one or more resin materials selected from a group of tetrafluoroethylene, ethylene-tetrafluoroethylene or ultra-macromolecular polyethylene.

The lower rubber closure body 14 is inserted in each of cavities 41 of an injection molding lower die 40 as shown in Figs. 4 through 6. The shape of the cavities 41 corresponds to the shape of the cavities 21 of the press lower die 20. An injection upper die 50 having a plurality of cavities 51 corresponding to the cavities 41 and a rubber material pressing upper die 60 are set on the injection lower die 40.

The rubber material pressing upper die 60 is movable close to or away from the injection upper die 50 and is provided with a rubber material introduction hole (sprue) 62 through which the fluid-state rubber material can be supplied from the injection molding machine 61. The introduction hole 62 is connected to a rubber material reservoir in the form of a recess 52 formed in the injection upper die 50. The recess 52 is connected to injection holes 53 which are connected to the cavities 51.

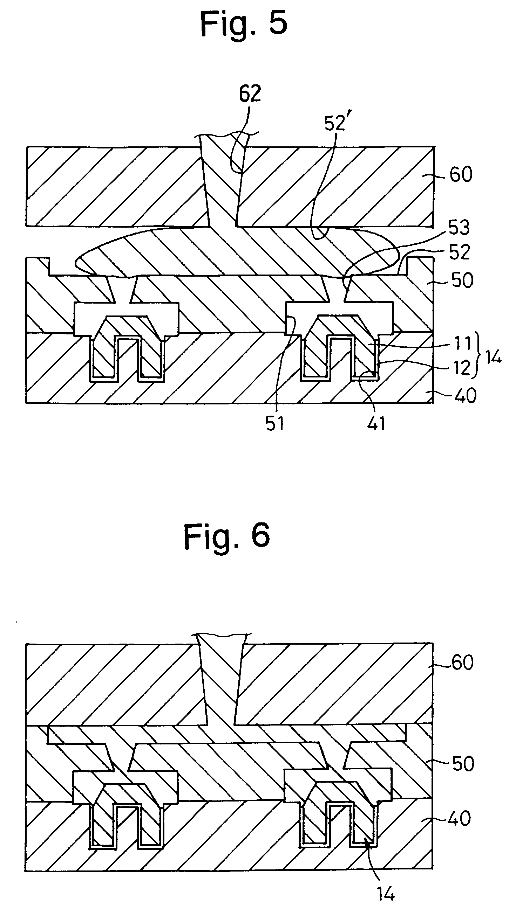

The injection lower die 40, the injection upper die 50 and the rubber material pressing upper die 60 constitute an injection compression molding machine, as is well known. Upon injection of the rubber material, the lower rubber closure bodies 14 are set in the cavities 41 of the injection lower die 40 and the injection upper die 50 is correctly set on the injection lower die 40. The rubber pressing upper die 60 is spaced from the injection upper die 50 to define a large rubber material receiving space 52' (Fig. 5) between the rubber material pressing upper die 60 and the rubber material receiving recess 52 (or the injection upper die 50).

In this state, the rubber material in a fluid state is introduced into the large rubber material receiving space 52' through the injection molding machine 61 and the introduction hole 62. Thereafter, the rubber material pressing upper die 60 is moved downward onto the injection upper die 50 to press the rubber material within the rubber material receiving space 52', so that the rubber material is injected into the cavities 51 through the injection holes 53. The injection lower die 40, the injection upper die 50 and the pressing upper die 60 are heated to an appropriate temperature in advance. Consequently, the rubber material injected into the cavities 51 are vulcanized on and formed integral with the lower rubber closure bodies 14 to form upper rubber closure bodies 15 on the corresponding lower rubber closure bodies 14. The rubber material of which the upper rubber closure bodies 15 are made is selected from, for example, IIR, NBR, BR, EPDM, etc., same as that of the lower rubber closure bodies 14. Alternatively, it is possible to make the upper rubber closure bodies 15 of a material different from that of the lower rubber closure bodies 14.

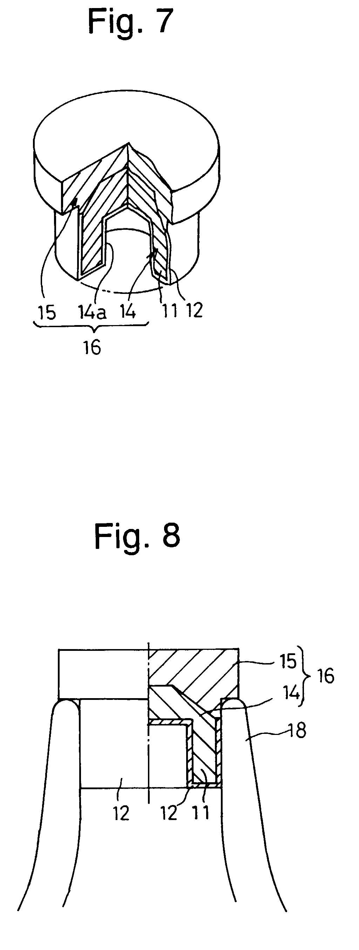

Figs. 7 and 8 show a single laminated rubber closure 16 (consisting of the lower rubber closure body 14 and the upper rubber closure body 15) as an example of a final molded product, manufactured by the process described above. The laminated rubber closure 16 is provided with the laminate film 12 which covers the lower part of the insertion and contact portion of the rubber closure that is brought into contact with an inner peripheral surface of a mouth 18. The upper part of the insertion and contact portion of the rubber closure 16 is defined by the exposed rubber body 11. Therefore, the portion of the rubber closure 16 that is in contact with a medicament or the like within a container exhibits a high chemical resistance due to the laminate film 12 and the portion of the rubber closure 16 that comes into contact with the upper portion of the mouth 18 exhibits a high seal efficiency due to the exposed rubber body 11.

Although a plurality of cavities 41 and 51 are formed in the injection lower and upper dies 40 and 50, the adjacent cavities 41 or adjacent cavities 51 are isolated from each other when the upper and lower dies 50 and 40 are closed. Consequently, when the lower and upper dies 40 and 50 are opened after the vulcanization, a plurality of laminated rubber closures 16 can be directly removed from the respective cavities 41 and 51. Namely, a substantially flashless molding is achieved in which a punching operation to cut flashing from the laminated rubber closures 16 after vulcanization is not necessary, thus resulting in a reduced manufacturing cost.

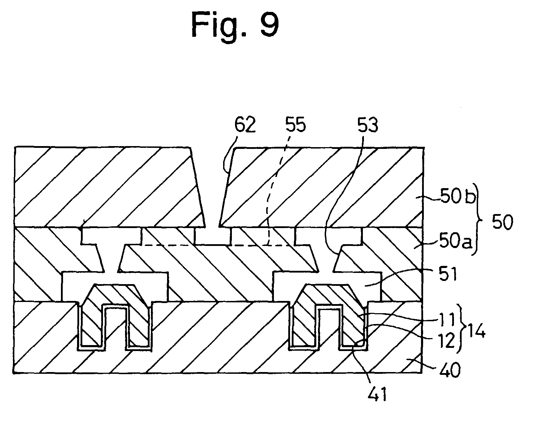

In an injection molding machine schematically shown in Figs. 4 through 6, the pressing upper die 60 is moved close to or away from the injection upper die 50. Alternatively, it is possible to mold the laminated rubber closure 16 by the use of a normal injection molding machine, as shown in Fig. 9 which shows the concept thereof. The injection molding upper die 50 is comprised of first and second upper dies 50a and 50b which are not relatively moved. The first upper die 50a is provided with cavities 51 and injection holes 53, and the second upper die 50b is provided with an introduction hole 62. The cavities 51 and the injection holes 53 are connected to the introduction hole 62 through a connection passage 55 formed in the first upper die 50a. The connection passage is formed in place of the rubber material receiving recess 52. It should be appreciated that the present invention can be applied to the normal injection molding machine like above.

As can be understood from the above discussion, according to the present invention, since the second press operation which has been indispensable in the prior art and the preformation of the rubber sheet from a masticated rubber material involved thereby are unnecessary, not only can a fear that foreign matter is mixed be eliminated, but also the manufacturing cost can be reduced due to an absence of the preformation step of the masticated rubber material. Moreover, according to the present invention, a flashless molding process can be achieved, in which a punching operation to cut flashing from the laminated rubber closures after vulcanization is not necessary, and hence the manufacturing cost can be reduced due to the absence of the punching operation.

Obvious changes may be made in the specific embodiments of the present invention described herein, such modifications being within the spirit and scope of the invention claimed. It is indicated that all matter contained herein is illustrative and does not limit the scope of the present invention.

## Claims

1. A method for manufacturing a laminated rubber closure comprising:
forming a lower rubber closure body of a rubber material with a synthetic resin film laminated thereon, with the synthetic resin film being exposed to the outer surface of the lower rubber closure body, and with the upper surface of the lower rubber closure body made of the rubber material being exposed to the outside;
inserting the lower rubber closure body in a cavity of a lower die;
setting an upper die having a cavity corresponding to the cavity of the lower die above the lower die; and
injecting a rubber material into the cavity of the upper die and vulcanizing and forming an upper rubber closure body integral with and on the lower rubber closure body disposed in the cavity of the lower die.

2. The method for manufacturing a laminated rubber closure according to claim 1, wherein a laminated rubber closure comprised of the upper and lower rubber closure bodies formed integrally with each other is shaped so that the synthetic resin film of the lower rubber closure body is brought into contact with a lower part of an inner peripheral surface of a mouth of a container in which the laminated rubber closure is to be fitted and the exposed rubber material of the upper rubber closure body is brought into contact with an upper part of the inner peripheral surface of the mouth of the container.

3. The method for manufacturing a laminated rubber closure according to claim 1, wherein the synthetic resin film is made of one or more resin materials selected from a group of tetrafluoroethylene, ethylene-tetrafluoroethylene or ultra-macromolecular polyethylene.

4. The method for manufacturing a laminated rubber closure according to claim 2, wherein the synthetic resin film is made of one or more resin materials selected from a group of tetrafluoroethylene, ethylene-tetrafluoroethylene or ultra-macromolecular polyethylene.

5. A laminated rubber closure produced by the manufacturing method according to claim 1.
